# EUROPEAN PATENT APPLICATION

(11) **EP 4 538 785 A1**
(43) Date of publication of application: **16.04.2025**
(21) Application number: 23820036.4
(22) Date of filing: 30.05.2023
(51) Int. Cl.: G02F 1/139, G02F 1/1337, G02F 1/1335, G02F 1/1339, G02B 5/30, B32B 17/10

(54) **OPTICAL LAMINATE, METHOD FOR MANUFACTURING SAME, AND SMART WINDOW COMPRISING SAME**

(30) Priority: 07.06.2022 KR 20220068977
(71) Applicant: Dongwoo Fine-Chem Co., Ltd., Iksan-si, Jeollabuk-do 54631 (KR)
(72) Inventor: AHN, Hong-Jun, Iksan-si, Jeollabuk-do 54631 (KR); LEE, Kang-Jae, Iksan-si, Jeollabuk-do 54631 (KR); JEON, Joo-Byung, Iksan-si, Jeollabuk-do 54631 (KR)
(74) Representative: Betten & Resch
(86) International application number: PCT/KR2023/007385
(87) International publication number: WO 2023/239100

(57) **Abstract**

The present invention relates to a variable transmittance optical laminate comprising: a first transparent member; a first laminate which is formed on the first transparent member, and on which a first polarizing plate, a first transparent conductive layer, and a first alignment layer are sequentially stacked; a second transparent member facing the first transparent member; a second laminate which is formed on the second transparent member, and on which a second polarizing plate, a second transparent conductive layer, and a second alignment layer are sequentially stacked; and a liquid crystal layer disposed between the first laminate and the second laminate. At least one of the first transparent conductive layer and the second transparent conductive layer is formed in direct contact with any one of the first polarizing plate and the second polarizing plate, the first transparent member and the first polarizing plate are bonded by means of a first bonding layer, the second transparent member and the second polarizing plate are bonded by means of a second bonding layer, and at least one of the first bonding layer and the second bonding layer is formed of an adhesive.

## Description

### Technical Field

The present disclosure relates to a variable transmittance optical stack, a method for manufacturing the same, and a smart window including the same.

### Background Art

The variable transmittance optical stack is driven by changing the transmittance by driving liquid crystal according to voltage application. The variable transmittance optical stack may be implemented into a form of a smart window by being bonded to a transparent member such as glass, etc.

Meanwhile, for a polarizer of a polarizing plate, i.e., one member of the variable transmittance optical stack, stretched polarizers are mainly used because they have advantages of relatively low manufacturing cost and simple manufacturing process. In the stretched polarizer, since a polarizing film is manufactured through a dyeing process, a crosslinking process, a stretching process, and a drying process, stress generated during the stretching process remains in the polarizer. Thus, when external stimulation is continuously applied to the stretched polarizer, the polarizer cannot withstand the residual stress and shrinks or deforms, which causes dimensional changes in the optical stack itself, leading to reduced adhesion of a sealant or a polarizer, damage to the sealant, and liquid crystal leakage through a sealant-bonded interface.

Korean Patent Application Publication No. 10-2019-0124560 disclosed a variable transmittance device in which at least one of a first substrate layer and a second substrate layer is a heat-shrinkable substrate layer such as a polyethylene terephthalate (PET) or triacetyl cellulose (TAC) film so that negative pressure caused by deformation of a substrate is relieved in an environment where external temperature changes and bubbles flowing into liquid crystals are suppressed. However, Korean Patent Application Publication has a limitation in that configuration that can prevent damage to the sealant and suppress bubbles flowing into liquid crystals by improving a shrinkage force of a polyvinyl alcohol (PVA) film, which has the highest shrinkage force in a polarizing plate structure, is not presented.

Therefore, there is a need to develop a variable transmittance optical stack that is capable of suppressing damage to the sealant and bubbles flowing into liquid crystals even with the stretched polarizer included, and suppressing a dimensional change of the optical stack, by improving a shrinkage force of the stretched polarizer.

### Disclosure

### Technical Problem

An objective of the present disclosure is to provide a variable transmittance optical stack capable of controlling shrinkage force of a stretched polarizer, thereby maintaining adhesion of a sealant or a polarizing plate.

Another objective of the present disclosure is to provide a variable transmittance optical stack capable of controlling a shrinkage force of a stretched polarizer, thereby minimizing dimensional changes.

Yet another objective of the present disclosure is to provide a variable transmittance optical stack capable of controlling a shrinkage force of a stretched polarizer, thereby minimizing damage to a sealant and bubbles flowing into liquid crystals even in temperature-changing environment.

### Technical Solution

To solve the above-described technical problems, according to the present disclosure, there is provided a variable transmittance optical stack, which includes: a first transparent member; a first stack formed on the first transparent member and including a first polarizing plate, a first transparent conductive layer, and a first alignment film stacked in order; a second transparent member opposing to the first transparent member; a second stack formed on the second transparent member and including a second polarizing plate, a second transparent conductive layer, and a second alignment film stacked in order; and a liquid crystal layer disposed between the first stack and the second stack,

wherein at least one of the first and second transparent conductive layers may be formed by directly contacting with one of the first and second polarizing plates, the first transparent member and the first polarizing plate may be bonded to each other by a first bonding layer, the second transparent member and the second polarizing plate may be bonded to each other by a second bonding layer, and at least one of the first bonding layer and the second bonding layer may be formed of a pressure-sensitive adhesive, and there are provided a method for manufacturing the same, and a smart window including the same.

### Advantageous Effects

For the variable transmittance optical stack according to the present disclosure, the shrinkage force of the stretched polarizer can be controlled so that the adhesion of the sealant, the polarizing plate, or the like can be maintained.

Furthermore, for the variable transmittance optical stack according to the present disclosure, the shrinkage force of the stretched polarizer can be controlled so that dimensional changes of the variable transmittance optical stack can be minimized.

Furthermore, for the variable transmittance optical stack according to the present disclosure, the shrinkage force of the stretched polarizer can be controlled so that damages to the sealant and bubbles flowing into liquid crystals of the variable transmittance optical stack can be minimized even in temperature-changing environment.

### Description of Drawings

FIG. 1 is a view illustrating a stacking structure of a variable transmittance optical stack according to an embodiment of the present disclosure.
FIGS. 2a to 2e are views each illustrating a stacking structure of a polarizing plate according to one or a plurality of embodiments of the present disclosure.
FIG. 3 is a view illustrating a method for manufacturing the variable transmittance optical stack according to an embodiment of the present disclosure.

The meanings of the reference numerals in each drawing are as follows:
100: transparent member
200: polarizing plate
210: stretched polarizer
220: protective layer
230: retardation matching layer
240: refractive index-matching layer
300: transparent conductive layer
400: alignment film
500: bonding agent
600: liquid crystal layer
700: bonding layer

### Best Mode

The present disclosure relates to a variable transmittance optical stack, a method for manufacturing the same, and a smart window including the same. The variable transmittance optical stack is configured such that at least one of a first bonding layer bonding a first transparent member and a first polarizing plate and a second bonding layer bonding a second transparent member and a second polarizing plate is formed of a pressure-sensitive adhesive, thereby controlling a shrinkage rate of a stretched polarizer. Therefore, it is possible to maintain the adhesion of a sealant, a polarizing plate, or the like, minimize dimensional changes of the optical stack, and minimize damages to sealant and bubble inflow in temperature-changing environment.

More specifically, the present disclosure relates to a variable transmittance optical stack including a first transparent member; a first stack formed on the first transparent member and including a first polarizing plate, a first transparent conductive layer, and a first alignment film stacked in order; a second transparent member opposite to the first transparent member; a second stack formed on the second transparent member, and including a second polarizing plate, a second transparent conductive layer, and a second alignment film stacked in order; and a liquid crystal layer disposed between the first stack and the second stack. At least one of the first transparent conductive layer and the second transparent conductive layer is formed by directly contacting with one of the first polarizing plate and the second polarizing plate. The first transparent member and the first polarizing plate are bonded by a first bonding layer, the second transparent member and the second polarizing plate are bonded by a second bonding layer, and at least one of the first bonding layer and the second bonding layer is formed of a pressure-sensitive adhesive.

Furthermore, the present disclosure relates to a method for manufacturing a variable transmittance optical stack including: forming a first transparent conductive layer and a second transparent conductive layer on a first surface of a first polarizing plate and a first surface of a second polarizing plate, respectively, P10; bonding a first transparent member and a second transparent member on a second surface of the first polarizing plate and a second surface of the second polarizing plate, P20; forming an upper stack by forming a first alignment film on a first surface of the first transparent conductive layer, P31; forming a lower stack by forming a second alignment film on a first surface of the second transparent conductive layer, P32-1, and forming a liquid crystal layer on the second alignment film, P32-2; and bonding the upper stack and the lower stack to each other, P40. At least one of the first transparent member and the second transparent member is bonded to the polarizing plate by a pressure-sensitive adhesive.

The variable transmittance optical stack of the present disclosure is particularly suitable for technical fields where light transmittance can be changed in response to application of voltage, and the variable transmittance optical stack may be used for example for a smart window, etc.

The smart window is an optical structure changing light transmittance in response to an electrical signal and controlling the amount of light or heat passing through the window. In other words, the smart window is provided to be changed into a transparent, opaque, or translucent state by a voltage and is called variable transmittance glass, lighting control glass, or smart glass.

The smart window may be used as partitions for partitioning an internal space of vehicles and buildings or for protecting privacy, or as skylights arranged in openings of buildings. The smart window may be used as highway signs, noticeboards, scoreboards, clocks, or advertising screens and may be used to replace windows of a means of transportation, such as cars, buses, aircrafts, ships, or trains, etc., or glass for a sunroof window of a means of transportation.

The variable transmittance optical stack of the present disclosure may also be used for the smart window of the various technical fields mentioned above. However, since a conductive layer is directly formed on the polarizing plate, it is not necessary to include a separate or additional substance for forming a conductive layer, and the thickness thereof is thin and is advantageous in the flexuosity, so the optical stack may be used to be particularly suitable for a smart window of a vehicle or a building. According to one or a plurality of embodiments, the smart window to which the variable transmittance optical stack of the present disclosure is applied may be used for front windows, rear windows, side windows, and sunroof windows of a means of transportation, i.e., a vehicle, or windows and doors for a building. Furthermore, in addition to an external light blocking use, the smart window may be used in an internal space partitioning use or a privacy protection use such as an inner partition for a vehicle or a building, and the like, and may be used in wearable devices such as helmets, glasses, or watches.

Hereinbelow, embodiments of the present disclosure will be described in detail with reference to drawings. However, the following drawings accompanied to this specification illustrate preferred embodiments of the present disclosure, and serve to further understand the technical idea of the present disclosure with the contents of the above-described invention. Therefore, the present disclosure should not be construed as being limited to matters described in the drawings.

Terms used in this specification are selected to describe embodiments and thus do not limit the present disclosure. In this specification, an element expressed in a singular form may be plural elements unless it is necessarily singular in the context. For example, "the polarizing plate" used in the specification may be at least one of first and second polarizing plates, "the transparent conductive layer" may be at least one of first and second transparent conductive layers.

As used herein, terms "comprise" and/or "comprising" do not mean exclusion of the presence or absence of one or more components, steps, movements and/or elements other than a component, a step, movement, and/or an element mentioned above. The same reference numerals are used throughout the specification to designate the same or similar elements.

As used herein, terms "substitutes" and/or "substituting" mean that positions or functions of mentioned components, steps, movement, and/or elements are replaced by other components, steps, movements, and/or elements.

Spatially relative terms "below", "lower surface", "lower portion", "above", "upper surface", and "upper portion" may be used to easily describe correlation between "one element or components" and "another element or other components", as shown in drawings. The spatially relative terms should be understood as terms including different directions of an element when being used or operated in addition to a direction shown in the drawings. For example, when an element shown in the drawings is turned over, the element described as being "below" or "lower" with respect to another element may be placed "on" the another element. Accordingly, the exemplary term "below" may include both downward and upward directions. An element may be aligned in a different direction, and accordingly, the spatially relative terms may be interpreted according to alignment.

The "planar direction" used in this specification may be interpreted as a direction perpendicular to a polarizing plate and/or a transparent conductive layer, that is, a direction viewed from the user's view side.

"Substantially" used in this specification may be interpreted to include not only physically identical, but also within a range of error in measurement or manufacturing processes and, for example, it may be interpreted to be equal to or less than 0.1% of the range of error.

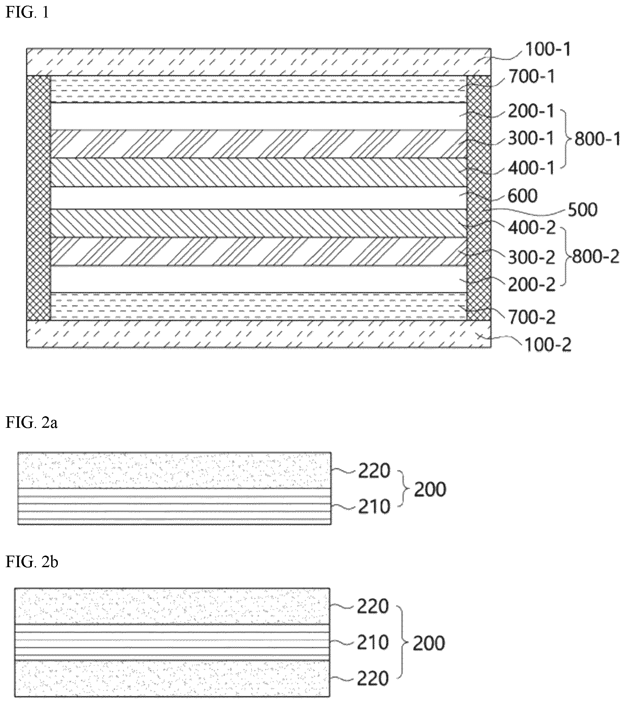

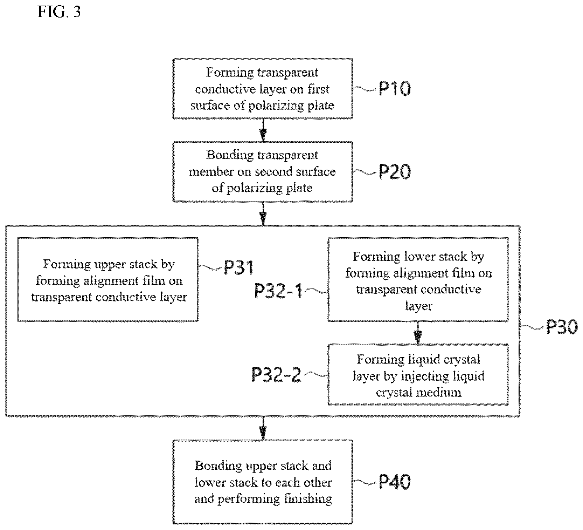

FIG. 1 is a view illustrating a stacking structure of a variable transmittance optical stack according to an embodiment of the present disclosure. FIGS. 2a to 2e are views each illustrating a stacking structure of a polarizing plate according to one or a plurality of embodiments of the present disclosure. FIG. 3 is a view illustrating a method for manufacturing the variable transmittance optical stack according to an embodiment of the present disclosure.

Referring to FIG. 1, according to the embodiment of the present disclosure, the variable transmittance optical stack may include a transparent member 100, a polarizing plate 200, a transparent conductive layer 300, an alignment film 400, a liquid crystal layer 600, and a bonding layer 700.

The transparent member 100 is provided to allow the optical characteristic of the optical stack to be visible and to prevent deformation of an inner stacking structure due to external physical and chemical environment changes, and may be provided in a form of a first transparent member 100-1 and a second transparent member 100-2 respectively on a viewer-side surface and a back side surface of the optical stack.

The transparent member 100 is not particularly limited as long as it can perform as a structural base of the optical stack in a method for manufacturing the optical stack to be described, without deteriorating the optical characteristic of the optical stack. Preferably, the transparent member 100 may be a glass member, for example, may be a material including oxide glass such as silicate glass, borate glass, phosphate glass, etc. In this case, in a following process, etc., occurrence of heat shrink may be prevented, and the optical stack may have a predetermined hardness, which are advantages.

According to one or a plurality of embodiments, the transparent member 100 may have a thickness ranging from 1mm to 20 mm. When the thickness of the transparent member 100 satisfies the above range, it is possible to secure excellent hardness, to achieve thinness, and to prevent inner panel deformation or crack occurrence. When the thickness of the transparent member 100 is specifically less than 1 mm, it may be difficult to achieve blocking of external air or to protect an inner stack structure from external impact. When the thickness of the transparent member 100 exceeds 20 mm, the transparent member 100 is disadvantageous in terms of thinning or weight lightening.

According to one or a plurality of embodiments, the transparent member 100 may have a single layer structure or a double layer structure. For example, the first transparent member 100-1 and the second transparent member 100-2 may have a single layer structure formed by a one member, as illustrated in FIG. 1, but is not limited thereto, and may have a double layer structure on which different members are stacked.

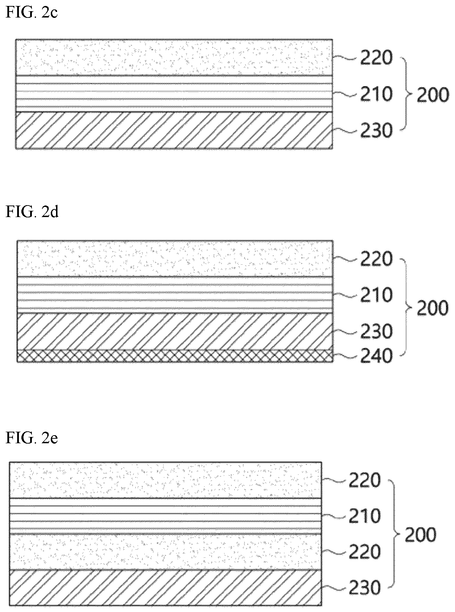

Referring to FIG. 2, the polarizing plate 200 may include a stretched polarizer 210 and include, on one surface or both surfaces of the stretched polarizer 210, a functional layer such as a protective layer 220, a retardation matching layer 230, and/or a refractive index-matching layer 240, etc. For example, the polarizing plate 200 may include the stretched polarizer 210 and the protective layer 220 stacked on one surface or both surfaces of the stretched polarizer 210 (referring to FIGS. 2a and 2b). Furthermore, according to the present disclosure, the polarizing plate 200 may include the stretched polarizer 210, the protective layer 220 stacked on a first surface of the stretched polarizer 210, and the retardation matching layer 230 stacked on a second surface opposite to the first surface of the stretched polarizer 210 (referring to FIG. 2c). Furthermore, according to the present disclosure, the polarizing plate 200 may include the stretched polarizer 210, the protective layer 220 stacked on the first surface of the stretched polarizer, and the retardation matching layer 230 and the refractive index-matching layer 240 stacked in order on the second surface opposite to the first surface of the stretched polarizer 210 (referring to FIG. 2d). Furthermore, according to the present disclosure, the polarizing plate 200 may include the stretched polarizer 210, the protective layer 220 stacked on the first surface of the stretched polarizer, and the protective layer 220 and the retardation matching layer 230 stacked in order on the second surface opposite to the first surface of the stretched polarizer 210 (referring to FIG. 2e).

According to the embodiment, the stretched polarizer 210 may include a stretched polyvinyl alcohol (PVA)-based resin. The PVA-based resin may be PVA-based resin obtained by saponifying polyvinyl acetate resin. As the polyvinyl acetate-based resin, in addition to polyvinyl acetate that is homopolymer of vinyl acetate, there may be a copolymer of vinyl acetate and other monomers that can be copolymerized with vinyl acetate. As the other monomers, unsaturated carboxylic acid-based monomers, unsaturated sulfonic acid-based monomers, olefin-based monomers, vinyl ether-based monomers, acrylamide-based monomers having ammonium groups, and the like may be used. Furthermore, the PVA-based resin includes a denatured resin, and for example, may be polyvinyl formal or polyvinyl acetal denatured into aldehyde.

The protective layer 220 is provided to preserve the polarization characteristic of the stretched polarizer 210 from a following processing and external environment, and may be implemented into a form such as a protective film, etc.

As illustrated in FIGS. 2a and 2b, the protective layer 220 may be formed by directly contacting with one or both surfaces of the stretched polarizer 210, but is not limited thereto. For example, the protective layer may be used as a double-layer structure in which one or more protective layers are successively stacked and may be formed in direct contact with other functional layers.

According to one or a plurality of embodiments, the protective layer 220 may contain one or more types selected from a group consisting of polyethylene terephthalate (PET), polyethylene isophthalate (PEI), polyethylene naphthalate (PEN), polybutylene terephthalate (PBT), diacetyl cellulose, triacetyl cellulose (TAC), polycarbonate (PC), polyethylene (PE), polypropylene (PP), polymethyl acrylate (PMA), polymethyl methacrylate (PMMA), polyethyl acrylate (PEA), polyethyl methacrylate (PEMA), and cyclic olefin polymer (COP).

The retardation matching layer 230 may be provided to complement optical characteristics of the optical stack, and may be implemented in a retardation film, and a retardation film currently developed or to be developed may be used therefor. For example, a quarter-wave plate (1/4 wave plate) or a half-wave plate (1/2 wave plate) may be used to delay a phase of light, and may be used alone or in combination.

As shown in FIGS. 2c and 2d, the retardation matching layer 230 may be formed by directly contacting with one surface of the polarizer 110 but is not limited thereto. For example, as illustrated in FIG. 2e, the retardation matching layer 230 may be formed on one surface of the protective layer 220, and the stretched polarizer 210, the protective layer 220, and the retardation matching layer 230 may be stacked in order.

The retardation matching layer 230 may be a polymer stretched film or a liquid crystal polymerized film, formed by stretching a polymer film in an appropriate method, the polymer film being capable of imparting optical anisotropy by stretching in an appropriate manner.

According to the embodiment, the polymer stretched film may use a polymer layer including: polyolefin such as polyethylene (PE), polypropylene (PP), etc.; cyclo olefin polymer (COP) such as polynorbornene, etc.; polyester such as polyvinyl chloride (PVC), polyacrylonitrile (PAN), polysulfone (PSU), acryl resin, polycarbonate (PC), polyethylene terephthalate (PET), etc.; cellulose ester polymer such as polyacrylate, polyvinyl alcohol (PVA), triacetyl cellulose (TAC), etc.; and/or a copolymer of two or more monomers among monomers that can form the polymers.

An obtaining method of the polymer stretched film is not particularly limited and, for example, may be obtained by forming the polymer material into a film shape and then stretching the material. The molding method for the film shape is not particularly limited, and the polymer stretched film may be formed in the known methods such as injection molding, sheet molding, blow molding, injection blow molding, inflation molding, extrusion molding, foaming molding, cast molding, etc., and may be formed in a secondary processing molding method such as pressure molding, vacuum molding, etc. Among them, extrusion molding and cast molding may be preferably used. At this point, for example, an unstretched film may be extruded by using an extruder to which a T-die, a circular die, etc., may be mounted. When a molded product is obtained in extrusion molding, a material made by melt-kneading various resin components, additives, etc. in advance may be used, and the molded product may be formed by melt-kneading during extrusion molding. Furthermore, various resin components are dissolved by using common solvent, for example, solvent such as chloroform, 2 methylene chloride, etc., and then is solidified in a cast dry manner, thereby cast-molding the non-stretched film.

The polymer stretched film may be provided by performing uniaxial stretching with respect to the molded film in a mechanical direction (MD, longitudinal or length direction), and by performing uniaxial stretching in a direction (TD, transverse direction or width direction) perpendicular to the MD. Furthermore, the molded film is stretched in a sequential biaxial stretching method of roll stretching and tenter stretching, a simultaneous biaxial stretching method of tenter stretching, a biaxial stretching method of tubular stretching, etc., so that a biaxial stretched film may be manufactured.

The liquid crystal polymerized film may contain a reactive liquid crystal compound in a polymerized state. The description of the reactive liquid crystal compound of the coated polarizer described above may be equally applied to the reactive liquid crystal compound.

According to one or a plurality of embodiments, when the retardation matching layer 230 is a polymer stretched film, a thickness thereof may be between 10 and 100 µm, and when the retardation matching layer is a liquid crystal polymerized film, a thickness thereof may be between 0.1 and 5µm.

The refractive index-matching layer 240 is provided to compensate for the difference in the refractive index of the optical stack due to the transparent conductive layer 300, and the refractive index-matching layer may serve to improve the visible characteristic by reducing the difference of the refractive index. Furthermore, the refractive index-matching layer 240 may be provided to correct a color based on the transparent conductive layer 300. Meanwhile, when the transparent conductive layer has a pattern, the refractive index-matching layer 240 may compensate the transmittance difference between a region with the pattern and a non-pattern region without the pattern.

Specifically, the transparent conductive layer 300 is stacked close to other members having a refractive index different therefrom (e.g., polarizer, etc.), and the difference of the refractive index between the transparent conductive layer and another layer close thereto may cause the difference of optical transmittance. Specifically, when the pattern is formed on the transparent conductive layer, there may be a problem in that the pattern region and the non-pattern region are visually distinguished from each other. Therefore, the refractive index-matching layer 240 is included to compensate for refractive index, thereby reducing the difference in the optical transmittance of the optical stack. Specifically, when the pattern is formed on the transparent conductive layer, the pattern region and the non-pattern region should be provided so as not to be visually distinguished.

According to the embodiment, the refractive index of the refractive index-matching layer 240 may be appropriately selected according to a material of another adjacent member, and may be preferably between 1.4 and 2.6, more preferably, may be between 1.4 and 2.4. In this case, it is possible to prevent optical loss due to a sharp refractive index difference between other members such as the stretched polarizer 210 and the transparent conductive layer 300.

The refractive index-matching layer 240 is not particularly limited as long as it can prevent the sharp refractive index difference between other members such as the stretched polarizer 210, etc. and the transparent conductive layer 300. The refractive index-matching layer may use a compound used in the formation of refractive index-matching layers currently developed or to be developed. For example, the refractive index-matching layer may be formed from a composition of forming a refractive index-matching layer, which includes polymerizable isocyanate compound.

According to the embodiment, the polarizing plate 200 may include other functional layers to assist or strengthen the characteristics of the polarizing plate in addition to the above-described functional layers. For example, the polarizing plate 200 may include an overcoat layer, etc. to further improve the mechanical durability.

According to one or a plurality of embodiments, the polarizing plate 200 may have a thickness of 30 to 200µm, and preferably, a thickness of 30 to 170µm, and more particularly, a thickness of 50 to 150µm. In this case, the polarizing plate 200 maintains the optical characteristic, and the optical stack having a thin thickness can be manufactured.

Meanwhile, the configuration of the optical stack according to the present disclosure is not only applicable to the stretched polarizer, and according to another embodiment of the present disclosure, a coated polarizer may be included.

The transparent conductive layer 300 is provided to drive the liquid crystal layer 600 and may be formed by directly contacting with the polarizing plate 200. For example, as shown in FIG. 1, the first transparent conductive layer 300-1 and the second transparent conductive layer 300-2 may be respectively formed by directly contacting with the first polarizing plate 200-1 and the second polarizing plate 200-2.

An optical stack used to manufacture an existing smart window, etc. is manufactured by forming a conductive layer for driving a liquid crystal on a first surface of a substrate and bonding a second surface of the substrate to a polarizing plate. However, according to the present disclosure, the variable transmittance optical stack is characterized in that the conductive layer directly is formed on one surface of the polarizing plate without a separate or additional substrate for forming the conductive layer, thereby improving the transmittance in the light transmissive mode and the flexuosity while reducing the entire thickness of the stack.

According to the embodiment, the transparent conductive layer 300 may be formed by being directly deposited on one surface of the polarizing plate 200. At this point, in order to improve the adhesion between the transparent conductive layer 300 and the polarizing plate 200, the transparent conductive layer 300 may be formed by performing pre-processing such as corona processing or plasma processing on one surface of the polarizing plate 200, and then directly contacting with the surface of the polarizing plate 200 to which the pre-processing is performed. The pre-processing is not limited to the corona processing or the plasma processing, and may be a pre-processing currently developed or to be developed without harming the objectives of the present disclosure.

According to another embodiment, in order to improve the adhesion between the transparent conductive layer 300 and the polarizing plate 200, the transparent conductive layer 300 may be formed by directly contacting with each polarizing plate 200 with a highly adhesive layer (not illustrated) located therebetween, the highly adhesive layer being provided on one surface of the polarizing plate 200.

The transparent conductive layer 300 is preferably have the transmittance with respect to visible light of 50% or more, and for example, may include one or more types selected from a group consisting of a transparent conductive oxide, metal, carbonaceous matter, conductive polymer, conductive ink, and nanowires, but the present disclosure is not limited thereto, and a material of a transparent conductive layer currently developed or to be developed may be used.

According to one or a plurality of embodiments, the transparent conductive oxide may include one or more types selected from a group consisting of indium tin oxide (ITO), indium zinc oxide (IZO), indium zinc tin oxide (IZTO), aluminum zinc oxide (AZO), gallium zinc oxide (GZO), florin tin oxide (FTO), zinc oxide (ZnO), etc. Furthermore, the metal may include one or more types selected from a group consisting of gold (Au), silver (Ag), copper (Cu), aluminum (Al), platinum (Pt), palladium (Pd), chromium (Cr), titanium (Ti), tungsten (W), niobium (Nb), tantalum (Ta), vanadium (V), iron (Fe), manganese (Mn), cobalt (Co), nickel (Ni), zinc (Zn), an alloy containing at least one of them, etc., and for example, may include silver - palladium - copper (APC) alloy or copper - calcium (CuCa) alloy. The carbonaceous matter may include one or more types selected from a group consisting of carbon nanotube (CNT), graphene, etc. The conductive polymer may include one or more types selected from a group consisting of polypyrrole, polythiophene, polyacetylene, PEDOT, polyaniline, etc. The conductive ink may be a mixture of metal powder and curable polymer binder, and the nanowires may be for example silver nanowires (AgNW).

Furthermore, the transparent conductive layer 300 may be formed by combining the above-described matters in a structure of two or more layers. For example, in order to reduce the reflectance of incident light and increase the transmittance, the transparent conductive layer 300 may be formed in a structure of two layers including a metal layer and a transparent conductive oxide layer.

The alignment film 400 is not particularly limited as long as it can provide orientation to a liquid crystal compound, and according to the embodiment, may be manufactured by rubbing processing. In this case, the alignment film 400 is formed by forming various material layer applicable to the alignment film, such as polyimide, etc., and then forming a fine line-shaped unevenness on a surface of the material layer by the rubbing processing using a rubbing roll.

As another embodiment, the alignment film may be formed by including photoaligned polymers or photocurable polymers. For example, the alignment film may be manufactured by applying and curing a composition of coating an alignment film including photoaligned polymers or photocurable polymers, photopolymerization initiators, and solvent.

The photoaligned polymers or photocurable polymers are not particularly limited and may use cinnamate based polymers, polyimide based polymers, etc. For example, photoaligned polymers or photocurable polymers may be poly(vinyl cinnamate)(PVCi), poly(siloxane cinnamate)(PSCN), poly(ω(4-chalconyloxy)alkoxyphenylmaleimide, 6-FDA-HAB-Cl, etc., and may be polymers currently developed or to be developed which is capable of expressing orientation.

According to another embodiment, instead of the alignment film or the photoaligned alignment film formed by the rubbing processing as described above, the alignment film may be formed by shaping a fine line-shaped unevenness formed by the rubbing processing.

The liquid crystal layer 600 adjusts transmittance of light incident in one or a plurality of directions according to electric fields to change a driving mode of the optical stack.

The liquid crystal layer 600 may include a liquid crystal compound and a spacer. According to the embodiment, the liquid crystal layer 600 may be a region defined by a first alignment film 400-1, a second alignment film 400-2, and a sealant (not illustrated). According to another embodiment, the liquid crystal layer 600 may be a region defined by the first alignment film 400-1, the second alignment film 400-2, and a bonding agent 500, as the sealant is formed integrally with the bonding agent bonding the first transparent member 100-1 and the second transparent member 100-2. A method of manufacturing the liquid crystal layer according to one or a plurality of embodiments will be described in detail in the method for manufacturing the optical stack.

The liquid crystal compound is driven in response to electric fields and is not particularly limited as long as it can control transmittance of light, and may be a liquid crystal compound currently developed or to be developed.

A liquid crystal driving method of the liquid crystal compound is not particularly limited and may be, for example, operated in the twisted nematic (TN) mode. However, the driving method is not limited thereto, and the liquid crystal driving method may be a super twisted nematic (STN) mode, a vertical alignment (VA) mode, an electrically controlled birefringence (ECB) mode, etc.

The spacer may include at least one spacer selected from a group consisting of a ball spacer and a column spacer. Specifically, it may be desirable that the spacer is a ball spacer. One or more spacers may be provided, and it may be desirable that the height of the spacer range from 1µm to 10µm. Furthermore, in a plan view, it is desirable that an occupancy area of the spacer in the liquid crystal layer 600 ranges from 0.01 to 10% based on the area of the liquid crystal layer 600 in terms of improving the user's visibility and the transmittance in the light transmissive mode.

The sealant may be located between a first stack 800-1 and a second stack 800-2 to bond the first stack 800-1 and the second stack 800-2 to each other.

The sealant may include a curable resins as base resins. As the base resins, UV curable resins or heat curable resins that are known to be usable for sealants in the art may be used. The ultraviolet curable resins may be polymers of UV curable monomers. The heat curable resins may be polymers of heat curable monomers.

The base resins of the sealant may be, for example, acrylate-based resins, epoxy-based resins, urethane-based resins, phenol-based resins, or compounds of these resins. According to an embodiment, the base resins may be acrylate-based resins, and the acrylate-based resins may be polymers of acrylic monomers. For example, the acrylic monomers may be multifunctional acrylate. According to another embodiment, the sealant may include monomer substances in addition to the base resins. For example, the monomer substances may be monofunctional acrylate. In the specification, the monofunctional acrylate may be compounds having one acryl group, and the multifunctional acrylate may be compounds having two or more acryl group. The curable resins may be cured by UV irradiation and/or heating. The UV irradiation condition or heat condition may be performed appropriately within the scope that does not damage the objective of the present disclosure. In case of need, the sealant may include initiators, for example, optical initiators or heat initiators.

The sealant may be provided in a method commonly used in the art and, for example, may be formed by drawing a sealant at an outer portion of the liquid crystal layer (i.e., inactivate region) with a dispenser having a nozzle.

The bonding agent 500 is located between the first transparent member 100-1 and the second transparent member 100-2 to bond and seal the first transparent member 100-1 and the second transparent member 100-2 to each other.

According to the embodiment, it is desirable that the bonding agent 500 is formed along outer circumferential surfaces of the first transparent member 100-1 and the second transparent member 100-2. More preferably, the bonding agent 500 may be disposed to surround an outer surfaces of the first stack 800-1 and the second stack 800-2. In this case, the stacking structures of the optical stacks can be firmly bonded to each other.

Meanwhile, as described above, the bonding agent may be formed separately from the sealant or integrally with the sealant.

When the bonding agent is formed integrally with the sealant, the bonding agent 500 serves as a partition wall for provision of a liquid crystal medium when a liquid crystal medium is injected. Accordingly, the liquid crystal layer 600 of the optical stack manufactured as described above may be defined, as described above, as a region partitioned by the first alignment film 400-1, the second alignment film 400-2, and the bonding agent 500 surrounding the liquid crystal layer 600. In this case, the bonding agent 500 may also perform a role of the sealant at the same time without a separate component corresponding to the sealant, and may reduce a defect occurrence rate in response to deformation of the sealant in a process of manufacturing the optical stack into the smart window, which are advantages.

According to one or a plurality of embodiments, the bonding agent may be prepared by the same composition as the sealant, but is not necessarily limited thereto.

The bonding layer 700 may be provided to bond the first polarizing plate 200-1 and the first transparent member 100-1 provided in the first stack 800-1 to each other, or to bond the second polarizing plate 200-2 and the second transparent member 100-2 provided in the second stack 800-2 to each other.

The bonding layer 700 may be formed using an adhesive or a pressure-sensitive adhesive. Preferably, to control the shrinkage force of the stretched polarizer, the pressure-sensitive adhesive may be used. An adhesive cured into a solid state by UV rays, heat, etc. and strongly fixing the polarizing plate and the transparent member directly transmits the shrinkage force of the polarizer to other members with a strong cohesive force due to elasticity. However, the pressure-sensitive adhesive that does not undergo a curing process has a week cohesive force due to elasticity and relatively strong adhesive force due to viscosity, so residual stress of the stretched polarizer may be relieved. Accordingly, it is possible to prevent the shrinkage force of the stretched polarizer from being transmitted to other members to cause damages to the sealant, bubbles flowing into the liquid crystals, and dimensional changes of the optical stack.

The pressure-sensitive adhesive may be a pressure-sensitive adhesive currently developed or to be developed. Preferably, the pressure-sensitive adhesive may have appropriate viscosity to prevent peeling, bubble, etc. from occurring when handling the optical stack, and have transparency and thermal stability. According to one or a plurality of embodiments, the pressure-sensitive adhesive may be an acrylic-based pressure-sensitive adhesive, a rubber-based pressure-sensitive adhesive, a silicone-based pressure-sensitive adhesive, a urethane-based pressure-sensitive adhesive, a polyvinyl alcohol-based based pressure-sensitive adhesive, a polyvinylpyrrolidone-based pressure-sensitive adhesive, a polyacrylamide-based pressure-sensitive adhesive, a cellulose-based pressure-sensitive adhesive, a vinylalkylether-based pressure-sensitive adhesive, etc. The pressure-sensitive adhesive is not particularly limited as long as it has viscosity and viscoelasticity. In an aspect of releasing stress and suppressing shrinkage force, preferably, the pressure-sensitive adhesive may include acrylic-based pressure-sensitive adhesive, for example, may include (meth) acrylate copolymers, crosslinkers, solvents, and the like.

The crosslinkers may adopt crosslinkers currently developed or to be developed and, for example, polyisocyanate compounds, epoxy resins, melamine resins, urea resins, dialdehydes, methylol polymers, etc., and may preferably include polyisocyanate compounds.

The solvents may include regular solvents used in the field of resin compositions. For example, the solvents may be solvents such as alcohol-based compounds such as methanol, ethanol, isopropanol, butanol, propylene glycol methoxy alcohol, and the like; ketone-based compounds such as methyl ethyl ketone, methyl butyl ketone, methyl isobutyl ketone, diethyl ketone, dipropyl ketone, and the like; acetate-based compounds such as methyl acetate, ethyl acetate, butyl acetate, propylene glycol methoxy acetate, and the like; cellosolve-based compounds such as methyl cellosolve, ethyl cellosolve, propyl cellosolve, etc.; hydrocarbon-based compounds such as hexane, heptane, benzene, toluene, xylene, and the like. The solvents may be used alone or in combination of two or more types.

The thickness of the bonding layer 700 may be appropriately determined depending on a type of resins serving as an adhesive, the strength of adhesion, the environment where the adhesive is used, and the like. According to the embodiment, to secure sufficient adhesive force and minimize the thickness of the optical stack, when the bonding layer is formed of a pressure-sensitive adhesive, the thickness thereof may be 2µm to 38µm, preferably, 5µm to 35µm, more preferably, 10µm to 30µm, and when the bonding layer is formed of an adhesive, the thickness thereof may be 100µm to 500µm, preferably, 200µm to 400µm.

According to the embodiment, the bonding layer 700 may be formed on one surface of both surfaces of the polarizing plate by a laminate method.

The variable transmittance optical stack of the present disclosure may include other members without harming the objectives of the present disclosure. For example, the variable transmittance optical stack may include an ultraviolet ray absorption layer, a hard coating layer, etc.

The ultraviolet ray absorption layer is not particularly limited as long as it is to prevent deterioration of the optical stack due to UV rays. For example, the ultraviolet ray absorption layer may use salicylic acid-based ultraviolet ray absorber (phenyl salicylate, p-tert-butylsalicylate, etc.), benzophenone-based ultraviolet ray absorber(2,4-dihydroxybenzophenone, 2,2'-dihydroxy-4,4'-dimethoxybenzophenone, etc.), benzotriazole-based ultraviolet ray absorber (2-(2'-hydroxy-5'-methylphenyl)benzotriazole, 2-(2'-hydroxy-3',5'-di-tert-butylphenyl)benzotriazole, 2-(2'-hydroxy-3'-tert-butyl-5'-methylphenyl)benzotriazole, 2-(2'-hydroxy-3',5'-di-tert-butylphenyl)-5-chlorobenzotriazole, 2-(2'-hydroxy-3'-(3",4",5",6"-tetrahydrophthalimide methyl)-5'-methylphenyl)benzotriazole, 2,2-methylenebis(4-(1,1,3,3-tetramethylbutyl)-6-(2H-benzotriazole-2-yl)phenol), 2-(2'-hydroxy-3'-tert-butyl-5'-methylphenyl)-5-chlorobenzotriazole, 2-(2'-hydroxy-3'-tert-butyl-5'-(2-octyloxicarbonylethyl)-phenyl)-5-chlorobenzotriazole, 2-(2'-hydroxy-3'-(1-methyl-1-phenylethyl)-5'-(1,1,3,3-tetramethylbutyl)-phenyl)benzotriazole, 2-(2H-benzotriazole-2-yl)-6-(linear and side chain dodecyl)-4-methylphenol, octyl-3-[3-tert-butyl-4-hydroxy-5-(chloro-2H-benzotriazole-2-yl)phenyl]propionate and 2-ethylhexyl-3-[3-tert-butyl-4-hydroxy-5-(5-chloro-2H-benzotriazole-2-yl)phenyl]propionate compounds, etc.), cyanoacrylate-based ultraviolet ray absorber (2'-ethylhexyl-2-cyano-3,3-diphenylacrylate, ethyl-2-cyano-3-(3',4'-methylene dioxyphenyl)-acrylate, etc.), triazine-based ultraviolet ray absorber, etc. The benzotriazole-based ultraviolet ray absorber or the triazine-based ultraviolet ray absorber that have high transparency and the excellent effect of preventing deterioration of the polarizing plate or the variable transmittance layer may be preferably used as the ultraviolet ray absorption layer, and the benzotriazole-based ultraviolet ray absorber having more appropriate spectroscopy absorption spectrum may be preferable. The benzotriazole-based ultraviolet ray absorber may be changed into "-Bis" and, for example, may be 6,6'-methylenebis(2-(2H-benzo[d][1,2,3]triazole-2-yl)-4-(2,4,4-trimethylpentane-2-yl)phenol), 6,6'-methylenebis(2-(2H-benzo[d][1,2,3]triazole-2-yl)-4-(2-hydroxyethyl)phenol), etc.

The hard coating layer is not particularly limited as long as it can protect members such as the polarizing plate, the variable transmittance layer, etc., from physical and chemical external impacts, and may be a hard coating layer currently developed or to be developed.

According to the embodiment, the hard coating layer may be formed by applying a composition for forming a hard coating layer on another member, and then curing the layer by light or heat. The composition fir forming a hard coating layer is not particularly limited and may include, for example, photocurable compound and photoinitiator.

As the photocurable compound and the photoinitiator, those commonly used in the art can be used without limitation, for example, the photocurable compounds may be photopolymerizable monomers, photopolymerizable oligomers, etc., and for example, may be monofunctional and/or multifunctional (meth) acrylate, and the photoinitiator may be an oxime ester-based photoinitiator, etc.

Furthermore, the present disclosure includes a method for manufacturing the variable transmittance optical stack in addition to the variable transmittance optical stack.

Referring to FIGS. 1 and 3, according to the embodiment of the present disclosure, the method for manufacturing the variable transmittance optical stack includes: forming the transparent conductive layer 300 on a first surface of the polarizing plate 200, P10; bonding the transparent member 100 on a second surface of the polarizing plate 200, P20; forming an upper stack by forming the first alignment film 400-1 on one surface of the first transparent conductive layer 300-1, P31; forming a lower stack by forming the second alignment film 400-2 on one surface of the second transparent conductive layer 300-2, P32-1; forming the liquid crystal layer 600 on the second alignment film 400-2, P32-2; and bonding the upper stack and the lower stack to each other, P40. At least one of the first transparent member 100-1 and the second transparent member 100-2 may be bonded to the polarizing plate 200 by the pressure-sensitive adhesive.

According to one or a plurality of embodiments, the forming of the transparent member 100 on the second surface of the polarizing plate 200 at P20 may be performed by bonding the first transparent member and the second transparent member respectively on the second surfaces of the first polarizing plate and the second polarizing plate by using the above-described bonding layer 700. The forming of the upper stack by forming the first alignment film 400-1 on one surface of the first transparent conductive layer 300-1 at P31 and the forming of the lower stack by forming the second alignment film 400-2 on one surface of the second transparent conductive layer 300-2 at P32-1 may be performed by forming the first alignment film and the second alignment film respectively on one surface of the first transparent conductive layer and one surface of the second transparent conductive layer, by using the rubbing processing or photoaligned compound.

According to the embodiment of the present disclosure, when the sealant bonding the first stack 800-1 and the second stack 800-2 to each other and the bonding agent bonding the first transparent member 100-1 and the second transparent member 100-2 to each other are prepared separately from each other, the forming of the liquid crystal layer at P32-2 may be performed by dispersing the spacer on the second alignment film and then forming the sealant along the outer circumferential surface of the second alignment film or the second transparent conductive layer and injecting a liquid crystal medium into the space formed by the sealant. In this case, as described above, the bonding of the upper stack and the lower stack at P40 may be performed by forming the liquid crystal layer, forming the bonding agent along the external circumferential surface of the second transparent member, and bonding and sealing the first transparent member and the second transparent member with the bonding agent.

According to another embodiment of the present disclosure, when the sealant bonding the first stack 800-1 and the second stack 800-2 to each other and the bonding agent bonding the first transparent member 100-1 and the second transparent member 100-2 to each other are prepared integrally with each other, the forming of the liquid crystal layer at P32-2 may be performed by dispersing the spacer on the second alignment film, forming the bonding agent along the external circumferential surface of the second transparent member, and then injecting a liquid crystal medium into the space formed by the bonding agent, thereby forming the liquid crystal layer. In this case, the bonding of the upper stack and the lower stack at P40 may be performed by bonding and sealing the first transparent member and the second transparent member to each other with the bonding agent for forming the liquid crystal layer.

According to the method for manufacturing the variable transmittance optical stack of the present disclosure, when manufacturing the existing optical stack into the smart window, it is possible to reduce a risk such as deformation of the stack when bonding the existing optical stack to the transparent member such as glass, etc., and to continuously perform the manufacturing process of the optical stack and the manufacturing process of the smart window, so the process economic feasibility can be improved.

A variable transmittance optical stack manufactured by the method for manufacturing the variable transmittance optical stack may satisfy the above-described characteristics, and may have the substantially identical properties.

Furthermore, in addition to the variable transmittance optical stack, the present disclosure includes a smart window including the same. Furthermore, the present disclosure includes a means of transportation including the smart window, for example, a vehicle in which the smart window is applied to at least one of front windows, rear windows, side windows, sunroof windows, and inner partitions, and a wearable device including the smart window, and windows for a building including the smart window.

According to the embodiment, the optical stack of the present disclosure is manufactured with the transparent member such as glass, etc. and may be used as the smart window itself without a separate glass member if necessary.

### Mode for invention

Hereinbelow, an embodiment of the present disclosure will be described in detail. However, the present disclosure may not be limited to embodiments disclosed below and may be implemented in various shapes, and the embodiments merely ensure that the present disclosure is complete, and are provided to fully inform those skilled in the art of the scope of the present disclosure, and the present disclosure is defined by the scope of the claims.

### Manufacturing example 1: manufacturing of polarizing plate

### (1) Swelling treatment process

A polyvinylalcohol film (material film, manufactured by Kurarey Company, Kuraray Poval Film VF-PE # 6000, average polymerization degree 2400, saponification degree 99.9 mol%) of a thickens of 60µm was returned while continuing to unroll the film from the material roll, and the film was immersed in a swelling bath added with pure water of 20°C for 30 seconds. In the swelling treatment process, with adding a difference in main speed between nip rolls, stretching (vertical uniaxial stretching) between the rolls was performed. Stretching magnification based on the material film was preset at 2.5 times.

### (2) Dyeing treatment process

Next, the film passing through the nip rolls was immersed in a dyeing bath with pure water/potassium iodide/iodine/boracic acid (mass ratio) of 100/2/0.01/0.3 at 30°C for 120 seconds. Also in the dyeing process, with adding difference in main speed between the nip rolls, stretching between the rolls (vertical uniaxial stretching) was performed. Stretching magnification based on the film after the swelling treatment process was preset at 1.1 times.

### (3) Crosslinking treatment process

Next, the film passing through the nip rolls was immersed in a first crosslinking bath with pure water/potassium iodide/boracic acid (mass ratio) of 100/12/4 at 56°C for 70 seconds. With adding difference in main speed between a nip roll and another nip roll provided between the first crosslinking bath and a second crosslinking bath, stretching between the rolls (vertical uniaxial stretching) was performed. Stretching magnification based on the film after the dyeing treatment process was preset at 1.9 times.

### (4) Complementary color treatment process

Next, the film after the crosslinking treatment process was immersed in the second crosslinking bath with potassium iodide/boracic acid/pure water (mass ratio) of 9/2.9/100 at 40°C for 10 seconds.

### (5) Cleaning treatment process

Next, the film after the second crosslinking treatment process was immersed in a cleaning bath added with pure water at 14°C for 5 seconds, and the film was cleaned with a cleaning amount of 5m³/h and a cleaning temperature of 14°C.

### (6) Drying treatment process

Next, the polarizer film was produced by heating-drying the film after the cleaning treatment process at 80°C for 190 seconds through a dry passage. A moisture rate after drying was 13.6%, and a thickness of the obtained polarizer film was about 21µm.

### (7) Bonding treatment process

Next, as the adhesive, a water-based adhesive was prepared by including 5 parts by weight of polyvinylalcohol (PVA) based on 100 parts by weight of water. Thereafter, a first protective film (TAC, 60µm) and a second protective film (TAC, 40µm) were stacked on opposite surfaces of the polarizer film with the prepared UV adhesive. UV exposure was performed to the obtained stack and the adhesive was cured to produce the polarizing plate. Furthermore, a thickness of the adhesive layer of the obtained polarizing film was about 2µm.

### Manufacturing example 2: manufacturing of composition for forming hard coating layer

The hard coating composition was prepared by mixing dendrimer compounds (Miwon Specialty Chemical Company, SP-1106) 16.2g, inorganic nanoparticles (10 to 20nm, silica particles: 50 weight%, solvent: methylethylketone (MEK))14.4g, polyfunctional(meth)acrylate including an ethylene glycol group (Nipponkayaku Co., Ltd., DPEA126) 1.8g, photoinitiators (1-hydroxycyclohexylphenylketone) 0.7g, and methylethylketone 2.9g.

### Manufacturing example 3: manufacturing of hard coating layer

The composition for forming a hard coating layer prepared in the manufacturing example 2 was dried on the second protective film (TAC, 40µm) of the polarizing film, bar-coated with the thickness adjusted with a Mayer bar type, and then dried at 80°C for 5 minutes and cured with a light intensity of 500mJ/cm² in a high pressure mercury lamp, thereby producing the hard coating layer.

### Manufacturing example 4: manufacturing of transparent conductive layer

The polarizing plate (substrate) of the manufacturing example 3 was inserted, and 450W DC power was applied to operate a sputter gun. Next, plasma was induced to an ITO (10wt% Sn doped In₂O₃) target to form a transparent conductive film (90nm) on the hard coating layer. The formed transparent conductive film was ion-treated by operating an ion gun at 50W DC power. Herein, manufacturing was performed by maintaining the pressure at 3mTorr at room temperature and supplying argon gas and oxygen gas at 30sccm and 1sccm respectively. At this point, the thickness of ITO was measured by a FT-SEM, and a ITO sheet resistance (Ω/□) was measured by a four-point probe.

### Manufacturing example 5: manufacturing of first bonding layer and bonding of glass

A pressure-sensitive adhesive (LINTEC KOREA, Inc., #3, 15µm) was formed on a surface of the first polarizing plate of the manufacturing example 4, the surface being opposite to the first transparent conductive layer, in a roll laminating method. Thereafter, the pressure-sensitive adhesive surface was bonded to sodalime glass (JMC GLASS, Inc., 1.1T) in the roll laminating method, and the polarizing plate was bonded to the glass.

### Manufacturing example 6: manufacturing of second bonding layer and bonding of glass

A pressure-sensitive adhesive (LINTEC KOREA, Inc., #3, 15µm) was formed on a surface of the second polarizing plate of the manufacturing example 4, the surface being opposite to the second transparent conductive layer, in the roll laminating method. Thereafter, the pressure-sensitive adhesive surface was bonded to sodalime glass (JMC GLASS, Inc., 1.1T) in the roll laminating method, and the polarizing plate was bonded to the glass.

### Manufacturing example 7: manufacturing of alignment film

An alignment solution was coated on the transparent conductive film of each of the first polarizing film of the manufacturing example 5 and the second polarizing film of the manufacturing example 6 and dried (80°C/2 minutes). Thereafter, UV rays was emitted on the dried alignment solution to manufacture an alignment film.

### Manufacturing example 8: dispersing and manufacturing of ball spacer

A mixed solvent was produced by mixing 0.03g ball spacer (SEKISUI Company, SP series) of the following example based on IPA 100ml. The stack of the manufacturing example 7 was inserted into the spacer spreader (SDSS-KHU02, Shindo Company), and the above-produced mixed solvent was dispersed under a condition of 110°C and then dried for 20 minutes to form a ball spacer on the alignment film of the stack of the manufacturing example 7. Thereafter, the number of ball spacers existing in an area of 1mm² was checked using an optical microscope.

### Manufacturing example 9: manufacturing of optical stack

On the transparent conductive film surface of the second polarizing film of the manufacturing example 8, by using the sealant dispenser (SHOTmini 200Ωx, MUSASHI Company), a sealant (UVF-006, 70,000mPa·s, SEKISUI Company) was applied by a sharp needle (SPN-0.25-12.7L) at 200mPa discharge pressure to be aligned with a product size drawing, and liquid crystals were injected on the alignment film in an one drop filling (ODF) process method. Thereafter, while the transmission shafts of the first polarizing film and the second polarizing film were arranged in parallel to each other at 0° or 90°, a smart window optical stack was produced in a vacuum bonding method at 3Kg/cm2 pressure.

### Examples and comparative examples

### Example 1

A variable transmittance optical stack of example 1 was manufactured according to the manufacturing examples 1 to 9.

### Example 2

Except that a second protective film (COP, 50µm) was used in the manufacturing example 1 by substituting the second protective film (TAC, 40µm), a variable transmittance optical stack of example 2 was manufactured equally to the example 1.

### Example 3

Except that, in the manufacturing example 5, the PVB film (SEKISUI Company, 380µm) and the sodalime glass (JMC GLASS, Inc., 1.1T) were placed on the surface of the first polarizing plate opposite to the first transparent conductive layer of the manufacturing example 4 with the adhesive and then heated by using a press machine at 90°C temperature and an approximately 1bar vacuum state for 10 to 20 minutes to produce the first bonding layer, a variable transmittance optical stack of example 3 was manufactured equally to the example 1.

### Example 4

Except that, in the manufacturing example 6, the PVB film (SEKISUI Company, 380µm) and the sodalime glass (JMC GLASS, Inc., 1.1T) were placed on the surface of the second polarizing plate opposite to the second transparent conductive layer of the manufacturing example 4 with the adhesive and then heated by using a press machine at 90°C temperature and an approximately 1bar vacuum state for 10 to 20 minutes to produce the second bonding layer, a variable transmittance optical stack of example 4 was manufactured equally to the example 1.

### Example 5

Except that, in the manufacturing example 6, the EVA film (PANAC KOREA co., Ltd., 400µm) and the sodalime glass (JMC GLASS, Inc., 1.1T) were placed on the surface of the second polarizing plate opposite to the second transparent conductive layer of the manufacturing example 4 with the adhesive and then heated by using a press machine at 90°C temperature and an approximately 1bar vacuum state for 10 to 20 minutes to produce the second bonding layer, a variable transmittance optical stack of example 5 was manufactured equally to the example 1.

### Example 6

Except that, in the manufacturing example 6, the optical clear region (OCR) (Hansol Chemical Co., 200µm) was applied and then the sodalime glass (JMC GLASS, Inc., 1.1T) was placed on the surface of the second polarizing plate opposite to the second transparent conductive layer of the manufacturing example 4 with the adhesive and then UV-cured to produce the second bonding layer, a variable transmittance optical stack of example 6 was manufactured equally to the example 1.

### Comparative example 1

Except that, the PVB film (SEKISUI Company, 380µm) and the sodalime glass (JMC GLASS, Inc., 1.1T) were respectively placed on the surface of the first polarizing plate opposite to the first transparent conductive layer of the manufacturing example 4 in the manufacturing example 5; and on the surface of the second polarizing plate opposite to the second transparent conductive layer of the manufacturing example 4 in the manufacturing example 6, with the adhesive, and then heated by using a press machine at 90°C temperature and an approximately 1bar vacuum state for 10 to 20 minutes to produce the first and second bonding layers, a variable transmittance optical stack of comparative example 1 was manufactured equally to the example 1.

### Comparative example 2

Except that, the EVA film (PANAC KOREA co., Ltd., 400µm) and the sodalime glass (JMC GLASS, Inc., 1.1T) were respectively placed on the surface of the first polarizing plate opposite to the first transparent conductive layer of the manufacturing example 4 in the manufacturing example 5; and on the surface of the second polarizing plate opposite to the second transparent conductive layer of the manufacturing example 4 in the manufacturing example 6, with the adhesive, and then heated by using a press machine at 90°C temperature and an approximately 1bar vacuum state for 10 to 20 minutes to produce the first and second bonding layers, a variable transmittance optical stack of comparative example 2 was manufactured equally to the example 1.

### Comparative example 3

Except that, the optical clear region (OCR)(Hansol Chemical Co., 200µm) and the sodalime glass (JMC GLASS, Inc., 1.1T) were respectively placed on the surface of the first polarizing plate opposite to the first transparent conductive layer of the manufacturing example 4 in the manufacturing example 5; and on the surface of the second polarizing plate opposite to the second transparent conductive layer of the manufacturing example 4 in the manufacturing example 6, with the adhesive, and then UV-cured to produce the first and second bonding layers, a variable transmittance optical stack of comparative example 3 was manufactured equally to the example 1.

### Experimental examples

### (1) Measuring of dimensional change (area) rate of upper and lower stacks

The first polarizing plate side and the second polarizing plate side of each of the optical stacks of the examples 1 to 6 and the comparative examples 1 to 3 were exposed at a temperature 85 °C and a humidity of 85 %R.H., for 120 hours. Longitudinal and transverse areas of the first and second polarizing plates before and after exposure were measured by using a 2D measurement system (INTEK IMS Co., Ltd., PREMIUM-600C), and an area change rate was calculated, and the results are indicated in Table 1 and Table 2.

### (2) Appearance evaluation

The upper stack side of each of the optical stacks of the examples 1 to 6 and the comparative examples 1 to 3 was exposed at a temperature of 85°C and a humidity of 85 %R.H., for 120 hours, and burst of the sealant and whether or not bubbles occur in a liquid crystal area were evaluated, and the results area indicated in Table 1 and Table 2.

### <Evaluation criteria>

∘: without burst of sealant and occurrence of bubbles in liquid crystal area
X: with burst of sealant and/or occurrence of bubbles in liquid crystal area.

**[Table 1]**

| Division | Example 1 | Example 2 | Example 3 | Example 4 | Example 5 | Example 6 |
|---|---|---|---|---|---|---|
| Area change rate in MD (longitudinal direction) of first polarizing plate | -0.01% | -0.01% | -0.09% | -0.01% | -0.01% | -0.01% |
| Area change rate in TD (transverse direction) of first polarizing plate | -0.01% | -0.01% | -0.02% | -0.01% | -0.01% | -0.01% |
| Area change rate in MD (longitudinal direction) of second polarizing plate | -0.01% | -0.01% | -0.01% | -0.09% | -0.12% | -0.15% |
| Area change rate in TD (transverse direction) of second polarizing plate | -0.01% | -0.01% | -0.01% | -0.02% | -0.03% | -0.04% |
| Appearance evaluation | ○ | ○ | ○ | ○ | ○ | ○ |

**[Table 2]**

| Division | Comparative example 1 | Comparative example 2 | Comparative example 3 |
|---|---|---|---|
| Area change rate in MD (longitudinal direction) of first polarizing plate | -0.22% | -0.24% | -0.27% |
| Area change rate in TD (transverse direction) of first polarizing plate | -0.05% | -0.06% | -0.09% |
| Area change rate in MD (longitudinal direction) of second polarizing plate | -0.22% | -0.24% | -0.27% |
| Area change rate in TD (transverse direction) of second polarizing plate | -0.05% | -0.06% | -0.09% |
| Appearance evaluation | X | X | X |

Referring to Table 1 and Table 2, in the examples 1 to 6 in which at least one of the first bonding layer and the second bonding layer is formed of the pressure-sensitive adhesive, there was almost no dimensional change in the MD (longitudinal direction) and the TD (transverse direction) in the stack including the bonding layer formed of the pressure-sensitive adhesive. In the results of the appearance evaluation, and sealant burst and bubbles in liquid crystals did not occur. However, in the comparative examples 1 to 3 in which the first bonding layer and the second bonding layer are formed of the adhesive, dimensional change in the MD and the TD was larger than the examples, and the results of the appearance evaluation were bad.

Therefore, when at least one of the first bonding layer bonding the first transparent member and the first polarizing plate to each other and the second bonding layer bonding the second transparent member and the second polarizing plate to each other is formed of the pressure-sensitive adhesive, the shrinkage force of the stretched polarizer can be controlled to allow dimensional change to be minimized, and the adhesion of the sealant or the polarizing plate can be maintained to allow provision of the optical stack without damage to the sealant and bubbles in liquid crystals.

### [Industrial Application]

According to the variable transmittance optical stack according to the present disclosure, the shrinkage force of the stretched polarizer can be controlled so that the adhesion of the sealant, the polarizing plate, or the like can be maintained.

## Claims

1. A variable transmittance optical stack comprising:
a first transparent member;
a first stack formed on the first transparent member and comprising a first polarizing plate, a first transparent conductive layer, and a first alignment film stacked in order;
a second transparent member opposite to the first transparent member;
a second stack formed on the second transparent member and comprising a second polarizing plate, a second transparent conductive layer, and a second alignment film stacked in order; and
a liquid crystal layer disposed between the first stack and the second stack,
wherein at least one of the first and second transparent conductive layers is formed by directly contacting with one of the first and second polarizing plates,
the first transparent member and the first polarizing plate are bonded to each other by a first bonding layer,
the second transparent member and the second polarizing plate are bonded to each other by a second bonding layer, and
at least one of the first bonding layer and the second bonding layer is formed of a pressure-sensitive adhesive.

2. The variable transmittance optical stack of claim 1, wherein the pressure-sensitive adhesive comprises one or more types of adhesives selected from a group consisting of an acrylic-based pressure-sensitive adhesive, a rubber-based pressure-sensitive adhesive, a silicone-based pressure-sensitive adhesive, a urethane-based pressure-sensitive adhesive, a polyvinyl alcohol-based pressure-sensitive adhesive, a polyvinylpyrrolidone-based pressure-sensitive adhesive, a polyacrylamide-based pressure-sensitive adhesive, a cellulose-based pressure-sensitive adhesive, and a vinylalkylether-based pressure-sensitive adhesive.

3. The variable transmittance optical stack of claim 1, wherein the bonding layer formed of the pressure-sensitive adhesive has a thickness ranging from 2µm to 38µm.

4. The variable transmittance optical stack of claim 1, wherein at least one of the first polarizing plate and the second polarizing plate comprises one or more types of functional layers selected from a group consisting of a protective layer, a retardation matching layer, and a refractive index-matching layer.

5. The variable transmittance optical stack of claim 1, wherein at least one of the first polarizing plate and the second polarizing plate has a thickness ranging from 30µm to 200µm.

6. The variable transmittance optical stack of claim 1, wherein at least one of the first transparent conductive layer and the second transparent conductive layer comprises one or more types selected from a group consisting of transparent conductive oxide, metal, carbonaceous matter, conductive polymers, conductive ink, and nanowires.

7. The variable transmittance optical stack of claim 1, wherein the liquid crystal layer comprises one or more types of spacers selected from a group consisting of a ball spacer and a column spacer.

8. The variable transmittance optical stack of claim 7, wherein the spacer has a height ranging from 1µm to 10µm.

9. The variable transmittance optical stack of claim 7, wherein an occupancy area of the spacer in the liquid crystal layer ranges from 0.01% to 10% of the area of the liquid crystal layer.

10. The variable transmittance optical stack of claim 1, wherein the variable transmittance optical stack comprises one or more types selected from a group consisting of an overcoat layer, an ultraviolet ray absorption layer, and a hard coating layer.

11. A method for manufacturing a variable transmittance optical stack, the method comprising:
forming a first transparent conductive layer and a second transparent conductive layer on a first surface of a first polarizing plate and a first surface of a second polarizing plate respectively, P10;
bonding a first transparent member and a second transparent member on a second surface of the first polarizing plate and a second surface of the second polarizing plate respectively, P20;
forming an upper stack by forming a first alignment film on a first surface of the first transparent conductive layer, P31;
forming a lower stack by forming a second alignment film on a first surface of the second transparent conductive layer, P32-1, and forming a liquid crystal layer on the second alignment film, P32-2; and
bonding the upper stack and the lower stack to each other, P40,
wherein at least one of the first transparent member and the second transparent member is bonded on the polarizing plate by a pressure-sensitive adhesive.

12. The method of claim 11, wherein the bonding of the upper stack and the lower stack is performed by arranging the first transparent member and the second transparent member at outer sides, and bonding and sealing the first transparent member and the second transparent member with a bonding agent.

13. A smart window comprising the variable transmittance optical stack of any one of claims 1 to 10.

14. A means of transportation comprising the smart window of claim 13.

15. A vehicle in which the smart window of claim 13 is applied to at least one of a front window, a rear window, a side window, a sunroof window, and an inner partition.

16. A wearable device comprising the smart window of claim 13.

17. Windows for a building comprising the smart window of claim 13.
